# EUROPÄISCHE PATENTSCHRIFT

(11) **EP 2 369 733 B1**
(45) Veröffentlichungstag und Bekanntmachung des Hinweises auf die Patenterteilung: **23.11.2016**
(21) Anmeldenummer: 11151095.4
(22) Anmeldetag: 17.01.2011
(51) Int. Cl.: H02M 7/48, H02M 7/537, H02M 7/5387, H02M 1/00

(54) **Schaltungsanordnung und Verfahren zur Erzeugung einer Wechselspannung aus einer Mehrzahl von Spannungsquellen mit zeitlich variabler Ausgangsgleichspannung**
Circuit assembly and method for generating alternating current from a number of power supply units with output DC voltage which varies over time
Agencement de commutation et procédé de production d'une tension alternative à partir d'une multitude de sources de tension ayant une tension continue de sortie variable dans le temps

(30) Priorität: 27.03.2010 DE 102010013138
(43) Veröffentlichungstag der Anmeldung: 28.09.2011
(73) Patentinhaber: SEMIKRON Elektronik GmbH & Co. KG, 90431 Nürnberg (DE)
(72) Erfinder: Schreiber, Dejan, 90408 Nürnberg (DE)

(56) Entgegenhaltungen:
- EP-A2- 2 148 419
- WO-A2-2004/008619

## Beschreibung

Die Erfindung beschreibt eine Schaltungsanordnung, sowie ein Verfahren zu deren Ansteuerung, zur Erzeugung einer Wechselspannung aus einer Mehrzahl von ungeregelten Spannungsquellen mit zeitlich variabler Ausgangsgleichspannung. Als derartige ungeregelte Spannungsquellen sind Photovoltaikanlagen oder Teile dieser Anlagen bevorzugt. Unter einer Photovoltaikanlage soll hier ausschließlich die Anordnung und elektrische Verbindung einer Mehrzahl von Photovoltaikmodulen verstanden werden, Teilanlagen sind hier ebenfalls subsumiert. Derartige Photovoltaikmodule sind zu Photovoltaikanlagen zusammengeschlossen und weisen eine bauartbedingte und von der Sonneneinstrahlung abhängige und somit zeitlich langsam variable Ausgangsgleichspannung auf. Diese Änderungen der Ausgangsgleichspannung weisen Zeitkonstanten im Minutenbereich oder in längeren Zeiteinheiten auf.

Zu Einspeisung des Ausgangsstroms einer derartigen Photovoltaikanlagen in das öffentliche oder ein lokales Stromnetz muss die Ausgangsgleichspannung, mittels einer Wechselrichterschaltung, in eine Wechselspannung konstanter Frequenz und Spannung umgewandelt werden.

Eine beispielhafte Schaltungsanordnung zur Erzeugung einer derartigen Wechselspannung ist in der DE 10 2008 034 955 A1 beschrieben. Hier ist eine Stromrichteranordnung offenbart, die eine Photovoltaikanlage mit zeitlich variierender Ausgangsspannung, einen Pegelwandler und einen Wechselrichter aufweist. In dem zugehörigen Verfahren wird der erste und zweite Kondensator des Pegelwandlers unabhängig von der Eingangsspannung mit jeweils dem halben Wert der Sollzwischenkreisspannung geladen. Nachteilig an derartigen Schaltungsanordnungen ist, dass hierbei die Photovoltaikanlage mit einem kurzzeitig im Frequenzbereich der Ansteuerung des Pegelwandler schwankende Strom belastet wird.

Für derartige Schaltungsanordnungen gibt es eine Vielzahl vom Anwendungsfall abhängiger und sich teilweise widerstrebender Anforderungen. Beispielhafte sollen die einzelnen Photovoltaikmodule möglichst linear belastet werden, d.h. deren Ausgangsstrom soll zeitlich möglichst konstant sein innerhalb von Zeitintervallen, wie sie für Leistungshalbleiterschaltungen typisch sind, also im Zeitbereich kleiner einer Sekunde, bzw. in einem Frequenzbereich oberhalb von 1 Hz. Ebenso soll die Eingangsspannung an der Wechselrichterschaltung möglichst konstant sein, wie auch die Übertragung von der Photovoltaikanlage zur Wechselrichterschaltung mit möglichst hoher Spannung erfolgen soll, um Leitungsverluste klein zu halten.

Schließlich soll die gesamte Schaltungsanordnung mit einem hohen Wirkungsgrad arbeiten, hierbei die Anzahl der notwendigen Komponenten klein und deren Dimensionierung, speziell diejenige von Spulen und Kondensatoren ebenfalls möglichst klein sein. Gleichzeitig sollte die Photovoltaikanlage, bzw. deren Photovoltaikmodule, derart betrieben werden, dass sie im Punkt der höchsten Leistungsabgabe (MPP - maximum power point) arbeitet. Hierzu ist eine geeignete Regelung, das sog. MPP-Tracking erforderlich.

Aus der WO 2004/008619 A2 ist ein System für den Leistungsfluss zwischen einer Gleichspannungsquelle und einem Wechselrichter bekannt. Dieser umfasst eine Pufferkapazität und eine steuerbare Stromrichteranordnung. Das System wird kontrolliert durch eine Leistungssteuereinrichtung, die eine erste Komponente zur Regelung des Gleichgewicht zwischen DC und AC Leistung umfasst und die eine zweite Komponente umfasst, die eine Änderung der Energie des Pufferkondensators zu einem vorbestimmten Sampling-Zeitpunkt des Zyklus der Spannungswelligkeit am Pufferkondensator auswertet.

Der Erfindung liegt die Aufgabe zugrunde, eine Schaltungsanordnung und ein zugehöriges Verfahren vorzustellen zur Erzeugung einer Wechselspannung aus einer Mehrzahl von Spannungsquellen mit jeweils zeitlich variabler Ausgangsgleichspannung, wobei die Strombelastung diese Spannungsquellen gleichmäßig und die Übertragung zur Wechselrichterschaltung mit möglichst geringen Verlusten behaftet ist.

Die Aufgabe wird erfindungsgemäß gelöst, durch eine Schaltungsanordnung mit den Merkmalen des Anspruchs 1, sowie durch ein Verfahren gemäß Anspruch 8. Bevorzugte Ausführungsformen sind in den jeweiligen abhängigen Ansprüchen definiert.

Die erfindungsgemäße Schaltungsanordnung weist eine oder eine Mehrzahl parallel geschalteter Teilschaltungsanordnungen zur Speisung mindestens einer Wechselrichterschaltung, die mit mindesten einem zugeordneten Transformator verbindbar ist. Hierbei besteht jede Teilschaltungsanordnung aus einer ungeregelten Spannungsquelle mit zeitlich variierender Ausgangsgleichspannung, einer Spannungsverdoppelungsschaltung und einer Spannungsregelschaltung mit zugeordneter Regelungseinrichtung.

Bei dem erfindungsgemäßen Verfahren zur Ansteuerung einer derartigen Schaltungsanordnung wird mittels der Spannungsverdoppelungsschaltung die Eingangsspannung verdoppelt, indem die beiden Leistungstransistoren der Halbbrückenschaltung zeitlich versetzt und jeweils mit gleicher Periodendauer von jeweils der Hälfte der Schaltperiode eingeschaltet werden. Hierdurch wird die ungeregelte Spannungsquelle konstant belastet, das heißt ihr Ausgangsstrom weist keine Schwankungen im Kurzzeitbereich, also im Bereich von einer Sekunde oder schneller auf, wie dies speziell für Photovoltaikanlagen bzw. Photovoltaikmodule bevorzugt ist.

Es ist bevorzugt, wenn die Spannungsverdoppelungsschaltung je einen Zweig positiver und negativer Polarität aufweist, wobei an deren Eingängen jeweils eine erste und zweite Induktivität, gebildet aus einer ersten und zweiten Spule oder auch nur aus der Induktivität der jeweiligen Zuleitung von der Spannungsquelle vorgesehen ist. An diese erste und zweite Induktivität schießt eine Halbbrückenschaltung zweier Leistungstransistoren zwischen dem positiven und dem negativen Zeig an. Anschließend ist in beiden Zweigen jeweils eine Diode und hieran anschließend eine Hintereinanderschaltung zweier erster Kondensator vorgesehen, die beide Zweige verbindet.

Für die Ausgestaltung der Spannungsregelschaltung sind grundsätzlich zwei Varianten besonders bevorzugt. Die erste Variante weist zwei getrennte Teilschaltungen einen Aufwärts- und einen Abwärtswandler auf. Für deren Anordnung sind ebenfalls zwei Varianten vorteilhaft. In einer ersten Variante sind die jeweiligen Aufwärtswandler direkt im Anschluss an die zugeordneten Spannungsverdoppelungsschaltungen vorgesehen um deren Ausgangsspannungen auf gleiches Potential anzuheben. Der jeweilige Abwärtswandler ist dann bei der Wechselrichterschaltung vorgesehen um dort die Übertragungsspannung auf einen geeigneten Wert der Zwischenkreisspannung abzusenken. Diese Variante hat den Vorteil eine besonders hohe Spannung zur Leistungsübertragung zwischen Photovoltaikanlage und Wechselrichterschaltung zur Verfügung zu stellen und damit die Leitungsverluste bestmöglich gering zu halten. Somit kann auch die Dimensionierung der Übertragungskabel und die damit verbundene Kosten wegen des geringeren Wertes des Übertragungsstroms reduziert werden.

Die zweite Variante mit zwei getrennten Teilschaltungen weist den jeweiligen Abwärtswandler im direkten Anschluss an die zugeordnete Spannungsverdoppelungsschaltung auf, während der Aufwärtswandler bei der Wechselrichterschaltung angeordnet ist. Somit erfolgt die Übertragung bei geringerer Spannung verglichen mit der ersten Variante. Dies kann allerdings vorteilhaft sein um die Gesamtanlage an Sicherheitsrichtlinien anzupassen und beispielhafte besondere Schutzvorschriften für höhere Spannungen nicht realisieren zu müssen. Insgesamt bietet die Spannungsregelschaltung mit zwei getrennten Wandlerschaltungen eine hohe Flexibilität zu Anpassung der Teilschaltungsanordnung an die anwendungsspezifischen Gegebenheiten.

Die zweite Variante der Spannungsregelschaltung ist grundsätzlich identisch der Spannungsverdoppelungsschaltung aufgebaut und kann somit vorteilhafterweise auch mit identischen Leistungshalbleitermodulen erstellt werden. Diese Spannungsregelschaltung wird allerdings entsprechend ihrer Aufgabe unterschiedlich zur Spannungsverdoppelungsschaltung angesteuert und dient der Anpassung der Ausgangsgleichspannung der verschiedenen zueinander parallel zu schaltenden Teilschaltungsanordnungen.

Das bei Photovoltaikanlagen notwendige regeln der Strom- / Spannungskennlinie, das MPP- Tracking, erfolgt ebenfalls durch die Regelungseinrichtung der Spannungsregelschaltung zusätzlich zur beschriebenen Anpassung der Ausgangsspannung der Spannungsverdoppelungsschaltung an die Zwischenkreisspannung der Wechselrichterschaltung.

Als Wechselrichterschaltung sind grundsätzlich verschieden Drei- Phasen-Wechselrichter vorsehbar. Besonders vorteilhaft ist es zwei Drei- Phasen- Wechselrichter parallel anzuordnen und um eine halbe Schaltperiode versetzten anzusteuern. Hierdurch ergibt sich ein dem gewünschten sinusförmigen Ausgang ausreichend angenäherte Spannung.

Die erfinderische Lösung wird an Hand der Ausführungsbeispiele der Fig. 1 bis 5 weiter erläutert.
Fig. 1 zeigt das Grundprinzip einer ersten erfindungsgemäßen Schaltungsanordnung, sowie einige deren Komponenten.
Fig. 2 zeigt weitere Komponenten einer erfindungsgemäßen Schaltungsanordnung.
Fig. 3 zeigt das Grundprinzip einer weiterer Ausgestaltungen der erfindungsgemäßen Schaltungsanordnung.
Fig. 4 zeigt weitere Komponenten einer erfindungsgemäßen Schaltungsanordnung.
Fig. 5 zeigt die Simulation des Ausgangsstromes einer erfindungsgemäßen Schaltungsanordnung bei Anwendung eines erfindungsgemäßen Verfahrens.

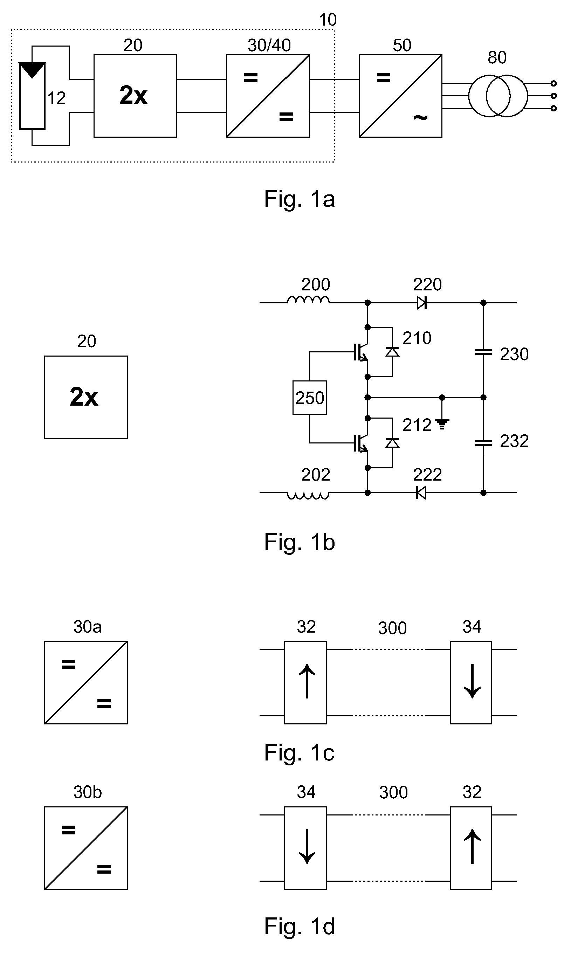

Fig. 1 zeigt schematisch das Grundprinzip einer ersten erfindungsgemäßen Schaltungsanordnung, sowie einige deren Komponenten. Dargestellt in Fig. 1a ist eine ungeregelte Spannungsquelle (12), hier eine Photovoltaikanlage, mit den bekannten Schwankungen der Ausgangsgleichspannung, wie auch des Ausgangsstroms bedingt durch die Variation der Sonneneinstrahlung. Zum vorteilhaften Betrieb derartigen Photovoltaikanlage (12) ist es nötig die Ausgangsspannung und -strom derart zu regeln, dass die abgegebene Leistung maximal ist. Dies ist unter dem Begriff des MPP-Trackings bekannt. Zudem ist es vorteilhaft die Photovoltaikanlage (12) derart zu belasten, dass der Ausgangsstrom keine kurzzeitigen Schwankungen aufweist.

Daher schließt sich erfindungsgemäß an den Ausgang der Photovoltaikanlage (12) eine Spannungsverdoppelungsschaltung (20) an, die zu einem Ausgangsstrom ohne kurzzeitige Schwankungen führt. Diese Spannungsverdoppelungsschaltung (20), dargestellt in Fig. 1b, mit je einem Zweig positiver und negativer Polarität weist in jedem Zweig eine zugeordnete Induktivität (200, 202) auf. Diese Induktivität (200, 202) ist hier durch die Verbindungsleitungen zwischen der Photovoltaikanlage und den weiteren Komponenten der Spannungsverdoppelungsschaltung gebildet. Falls die Induktivität (200, 202) dieser Zuleitungen nicht ausreichend sein sollte können zusätzlich noch im Vergleich zum Stand der Technik Spulen mit geringer Induktivität vorgesehen sein. Formal schließt also die Spannungsverdoppelungsschaltung (20) hier die Verbindungsleitung mit der Photovoltaikanlage (12) ein. Diese Verbindungsleitungen haben eine Längendimension in der Größenordnung von zehn Metern.

Anschließend an die Induktivitäten (200, 202) ist eine Halbbrückenschaltung zwischen dem positiven und dem negativen Zweig vorgesehen. Diese Halbbrückenschaltung weist ihrerseits eine Hintereinanderschaltung eines ersten (210) und eines zweiten Leistungstransistors (212), ggf. mit antiparallel geschalteten Freilaufdioden, auf.

Diese Halbbrückenschaltung ist mittels je einer Diode (220, 222) pro Zweig mit einer Hintereinanderschaltung (230, 232) zweiter Kondensatoren (230, 232) verbunden. Hierbei ist im ersten dem Zweig positiver Polarität die Anode der Diode mit der Halbbrückenschaltung und die Kathode mit der Kondensatorschaltung verbunden. Im zweiten, dem Zweig negativer Polarität, ist die Kathode mit der Halbbrückenschaltung und die Anode mit der Kondensatorschaltung verbunden.

Es ist weiterhin bevorzugt, wenn die jeweiligen Mittelanzapfungen der Halbbrückenschaltung und der Kondensatorschaltung miteinander verbunden sind. Zur Funktion als Spannungsverdoppelungsschaltung (20) werden beide Leistungstransistoren (210, 212) alternierend für jeweils das gleiche Zeitintervall mit einer moderaten Schaltfrequenz von vorzugsweise zwischen 500Hz und 2kHz angeschaltet. Es sind auch Schaltfrequenzen unterhalb von 250Hz und bis zu 5kHz geeignet aber in der Regel nicht notwendig. Es ist somit jederzeit ein Stromfluss entweder durch den ersten oder durch den zweiten Leistungstransistor (210, 212) gegeben und somit wird die Strombelastung des Photovoltaikanlage (12) konstant gehalten. Konstant meint hier es treten keine kurzzeitigen Schwankungen speziell in der Größenordnung der Ansteuerfrequenz der Leistungstransistor (210, 212) auf.

An die Spannungsverdoppelungsschaltung schließt sich eine Spannungsregelschaltung an (30, 40), die abhängig von den Einsatzbedingungen unterschiedlich ausgestaltet sein kann. Die erste Variante weist eine Kombination aus einem Abwärts- (34) und einem Aufwärtswandler (32) auf, deren Reihenfolge grundsätzlich beliebig ist. Hier ist allerdings wesentlich, das die beiden Wandlerschaltungen nicht direkt benachbart angeordnet sind, sondern, dass ihre Verbindungsleitung (300), gemäß Fig. 1c/d, den wesentlichen Abstand zwischen der Photovoltaikanlage (12) und der Wechselrichterschaltung (50) überbrückt.

Somit kann durch Anordnung eines Abwärtswandlers (34) im Anschluss an die Spannungsverdoppelungsschaltung (20) die Spannung in der Verbindungsleitung (300) auf einen Wert unterhalb einer definierten Schwelle, beispielhafte unterhalb von 600V oder unterhalb von 1000V eingestellt werden. Dies kann den Aufwand für den Berührungsschutz abhängigen von nationalen Vorschriften gegenüber höheren Spannungen wesentlich vereinfachen.

Eine analoge Ausgestaltung mit Vertauschung der beiden Wandlerschaltungen (32, 34) ermöglicht demgegenüber eine möglichst hohe Spannungen in der Verbindungsleitung (300), die somit einen entsprechend kleineren Wert des Stromes nach sich zieht und damit bezüglich elektrischen Verlusten, der Dimensionierung und auch der Kosten dieser Verbindungsleitung (300) vorteilhaft ist.

Die zweite Variante weist als Spannungsregelschaltung (40) eine Teilschaltung auf, die identisch der Spannungsverdoppelungsschaltung (20) ausgebildet ist, allerdings nicht wie diese angesteuert wird. Zur Spannungsregelung werden die beiden Schalter vorzugsweise für jeweils gleiche Zeitintervalle aber mit geeigneter Länge und ggf. Überlappung angesteuert um die schwankende Eingangsspannung an die gewünschte konstante Ausgangsspannung anzupassen.

In beiden Varianten wird das MPP- Tracking der Photovoltaikanlage (12) durch die Spannungsregelschaltung (30, 40), nicht durch die Spannungsverdoppelungsschaltung (20), gesteuert. Somit ist es nicht notwendig, dass die Spannungsverdoppelungsschaltung (20) eine Steuerverbindung ihrer Regeleinrichtung (250) mit der Spannungsregelschaltung (30, 40) oder der Wechselrichterschaltung (50) aufweist.

Die Photovoltaikanlage (12), die Spannungsverdoppelungsschaltung (20) und die jeweilige Spannungsregelschaltung (30, 40) bilden eine Teilschaltungsanordnung, die mit einer Wechselrichterschaltung (50) zu einer erfindungsgemäßen Schaltungsanordnung verbunden ist.

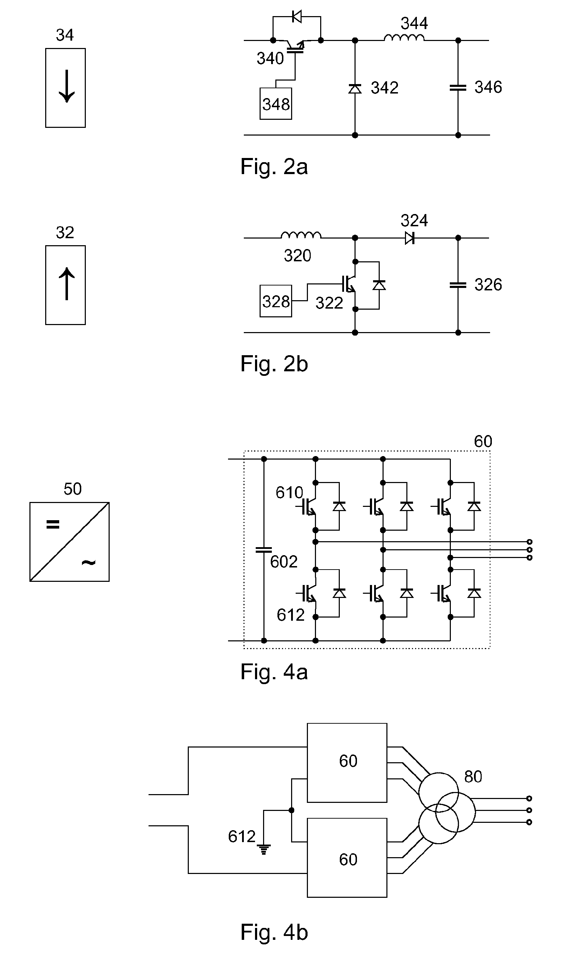

Fig. 2 zeigt Komponenten einer erfindungsgemäßen Schaltungsanordnung, hier die beiden Wandlerschaltungen, die dem Stand der Technik entsprechen. Der Abwärtswandler (34), gemäß Fig. 2a, weist in seinem ersten Zweig, demjenigen der positiven Polarität, einen Leistungstransistor (340) auf. Hieran schließt sich eine Diode (342), die den ersten mit dem zweiten Zweig verbindet und eine Induktivität (344) im ersten Zweig, sowie ein beide Zweige verbindender Kondensator (346) an. Es kann in der oben genannten Anwendung mit einer sich an den Abwärtswandler (34) anschließend Verbindungsleitung ausreichend sein, die genannte Induktivität (344) durch die Induktivität der Verbindungsleitung (300, vgl Fig. 1d) auszubilden, oder eine entsprechend klein dimensionierte Spule vorzusehen.

Der Aufwärtswandler (32), gemäß Fig. 2b, weist in seinem ersten Zweig eine Induktivität (320) auf, die ebenfalls vorteilhafterweise durch eine Verbindungsleitung (300, vgl Fig. 1c), ggf. mit einer zusätzlichen Spule geringer Induktivität, ausgebildet ist. Hieran schließt sich ein Leistungstransistor (322), der den ersten mit dem zweiten Zweig verbindet und eine Diode (324) im ersten Zweig, sowie ein beide Zweige verbindender Kondensator (326) an.

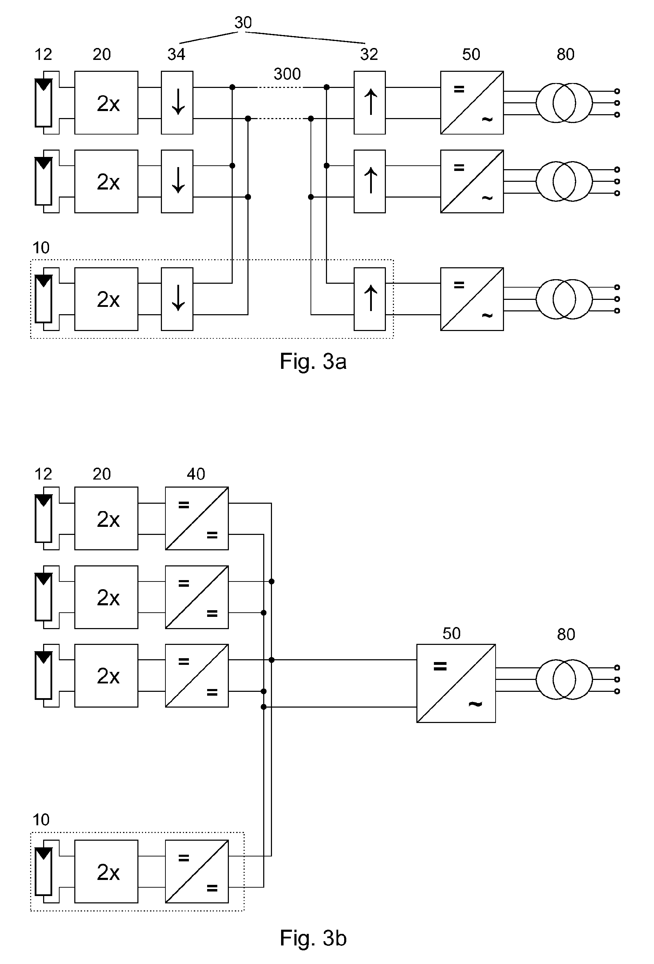

Fig. 3 zeigt das Grundprinzip einer weiterer Ausgestaltungen der erfindungsgemäßen Schaltungsanordnung. In Fig. 3a dargestellt ist hier die Anordnung von Teilschaltungen (10), die gemäß der ersten Variante, wie zu Fig. 1 beschrieben, mit einer Spannungsregelschaltung bestehend aus zwei Wandlerschaltungen (32, 34) aufgebaut ist. Hierbei sind die Teilschaltungen im Bereich der Verbindungen (300) der beiden Wandlerschaltungen (32, 34) miteinander verbunden und parallel zueinander geschaltet. Die Ausgänge der jeweiligen Teilschaltungen sind dann mit einer geeigneten Wechselrichterschaltung (50) verbunden.

Fig. 3b zeigt eine Anordnung gemäß der zweiten oben bei Fig. 1 genannten Variante mit zwei gleichartig ausgebildeten aber unterschiedlich angesteuerten Schaltungen zur Spannungsverdoppelung (20) und Spannungsregelung (40). Hierbei sind die Ausgänge der Teilschaltungen miteinander und mit einer geeigneten Wechselrichterschaltung (50) verbunden.

Fig. 4 zeigt weitere Komponenten, hier zwei Ausbildungen der Wechselrichterschaltung (50), einer erfindungsgemäßen Schaltungsanordnung. Im einfachsten Fall ist die Wechselrichterschaltung ausgebildet als eine Drei- Phasen-Brückenschaltung (60) gemäß dem Stand der Technik, dargestellt in Fig. 4a.

Es ist allerdings, dargestellt in Fig. 4b, vorteilhaft zwei derartige Drei- Phasen-Brückenschaltung (60) parallel zu schalten und gegeneinander um eine halbe Schaltperiode versetzt zu takten. Hierbei kann der Mittelpunkt der beiden Drei- Phasen-Brückenschaltungen (60) auf Erdpotential (612) oder auf dem Mittenpotential (212) der Spannungsverdopplungsschaltung (20) liegen. Ebenso kann es alternativ vorteilhaft sein als Wechselrichterschaltung (50) einen Drei- Punkt- Wechselrichter vorzusehen.

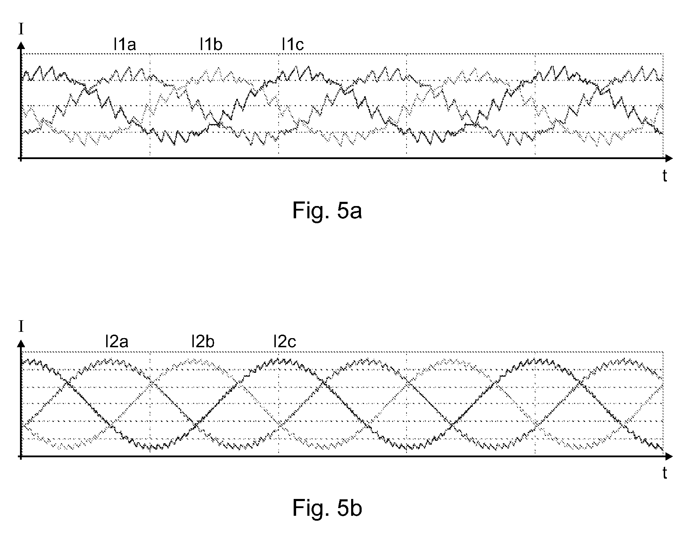

Fig. 5 zeigt die Simulation des Ausgangsstromes einer erfindungsgemäßen Schaltungsanordnung mit einer Wechselrichterschaltung (50) gemäß Fig. 4b bei Anwendung des dort genannten erfindungsgemäßen Verfahrens im Vergleich zum Ausgangsstrom einer Wechselrichterschaltung gemäß Fig. 4a. Diese weist bedingt durch den Einsatz der Spannungsregelschaltung (30, 40) einen entsprechend stark gestörten Verlauf der Sinuskurve auf. Durch den Einsatz der Wechselrichterschaltung (50) gemäß Fig. 4b und durch die versetzte Taktung der beiden Teile dieser Wechselrichterschaltung kann die Welligkeit innerhalb der jeweiligen Sinuskurven der drei Phasen des Ausgangsstroms deutlich reduziert werden.

Die gesamte Schaltungsanordnung vereint somit die Vorteile:
- Konstante Belastung der Spannungsquelle.
- Flexible Wahl der Übertragungsspannung zur Wechselrichterschaltung.
- Klein dimensionierte Spulen in der Spannungsverdoppelungsschaltung und in den Spannungsregelschaltungen.
- Ausgangsstrom geringer Welligkeit.

## Patentansprüche

1. Schaltungsanordnung mit einer oder einer Mehrzahl parallel geschalteter Teilschaltungsanordnungen (10) zur Speisung mindestens einer Wechselrichterschaltung (50), die mit einem Transformator (80) verbindbar ist, wobei eine Teilschaltungsanordnung (10) aus einer ungeregelten Spannungsquelle (12) mit zeitlich variierender Ausgangsspannung besteht,
**gekennzeichnet dadurch, dass**
die Teilschaltungsanordnung zusätzlich aus einer Spannungsverdoppelungsschaltung (20) und einer Spannungsregelschaltung (30, 40) mit Regelungseinrichtung (328, 348) besteht.

2. Schaltungsanordnung nach Anspruch 1, wobei
die Spannungsverdoppelungsschaltung (20) je einen Zweig positiver und negativer Polarität aufweist, wobei an deren Eingängen jeweils eine erste (200) und zweite Induktivität (202), gebildet aus einer ersten und zweiten Spule oder aus der Induktivität der jeweiligen Zuleitung von der Spannungsquelle (12) vorgesehen ist, sich hieran eine Halbbrückenschaltung zweier Leistungstransistoren (210, 212) zwischen dem positiven und dem negativen Zweig anschließt, und in beiden Zweigen weiterhin jeweils eine Diode (220, 222) und hieran anschließend eine Hintereinanderschaltung zweier erster Kondensatoren (230, 232), die beide Zweige verbindet, vorgesehen ist.

3. Schaltungsanordnung nach Anspruch 2, wobei
die Mittelanzapfungen der Halbbrückenschaltung 210, 212) und der Hintereinanderschaltung der Kondensatoren (230, 232) miteinander verbunden sind.

4. Schaltungsanordnung nach Anspruch 1, wobei
die Spannungsregelschaltung aus einem Abwärtswandler (34) mit einem Leistungstransistor (340) im positiven Zweig, einer den positiven und negativen Zweig verbindenden Diode (342) und einer dritten Induktivität (344), vorzugsweise einer dritten Spule, und einem vor- oder nachgeschalteten Aufwärtswandler (32), mit einer vierten Induktivität (320), vorzugsweise einer vierten Spule, einem den positiven und negativen Zweig verbindenden Leistungstransistor (322) und einer Diode (324) im positiven Zweig besteht.

5. Schaltungsanordnung nach Anspruch 4, wobei
der Abwärtswandler (34) direkt benachbart zur Spannungsverdoppelungsschaltung (20) und diese direkt benachbart zur Spannungsquelle (12) angeordnet ist und wobei der Aufwärtswandler (32) direkt benachbart zur Wechselrichterschaltung (50) angeordnet ist.

6. Schaltungsanordnung nach Anspruch 4, wobei
der Aufwärtswandler (32) direkt benachbart zur Spannungsverdoppelungsschaltung (20) und diese direkt benachbart zur Spannungsquelle (12) angeordnet ist und wobei der Abwärtswandler (34) direkt benachbart zur Wechselrichterschaltung (50) angeordnet ist.

7. Schaltungsanordnung nach Anspruch 1, wobei
die Spannungsregelschaltung (40) analog zur Spannungsverdoppelungsschaltung (20) ausgebildet ist.

8. Verfahren zur Ansteuerung einer Schaltungsanordnung nach einem der vorhergehenden Ansprüche, wobei die Spannungsverdoppelungsschaltung (20) die Spannung der ungeregelten Spannungsquelle (12) verdoppelt, und wobei eine Regelung einer Strom- / Spannungskennlinie, ein MPP- Tracking, der ungeregelten Spannungsquelle (12) durch die Regelungseinrichtung (328, 348) der Spannungsregelschaltung (30) erfolgt.

9. Verfahren nach Anspruch 8, wobei
die Spannungsverdoppelungsschaltung (20) die Spannung der ungeregelten Spannungsquelle (12) verdoppelt, indem die beiden Leistungstransistoren (210, 212) der Halbbrückenschaltung zeitlich versetzt und jeweils mit gleicher Periodendauer von jeweils der Hälfte der Schaltperiode eingeschaltet werden.

10. Verfahren nach Anspruch 9, wobei
die beiden Leistungstransistoren (210, 212) der Spannungsverdoppelungsschaltung (20) mit einer Frequenz zwischen 250Hz und 5kHz, vorzugsweise zwischen 500Hz und 2kHz angesteuert werden.

## Claims

1. Circuit arrangement comprising one or a plurality of parallel-connected partial circuit arrangements (10) for feeding at least one inverter circuit (50) which is connectable to a transformer (80), wherein a partial circuit arrangement (10) consists of an unregulated voltage source (12) having a temporally varying output voltage, **characterized in that** the partial circuit arrangement additionally consists of a voltage doubling circuit (20) and a voltage regulating circuit (30, 40) with regulating device (328, 348).

2. Circuit arrangement according to Claim 1, wherein the voltage doubling circuit (20) has a respective branch of positive and negative polarity, wherein, at the inputs thereof, a first (200) and second inductance (202), formed from a first and second coil or from the inductance of the respective supply line from the voltage source (12), is respectively provided and is followed by a half-bridge circuit formed by two power transistors (210, 212) between the positive and negative branches, and, in both branches, provision is furthermore made respectively of a diode (220, 222) and, following the latter, a series circuit formed by two first capacitors (230, 232), which connects both branches.

3. Circuit arrangement according to Claim 2, wherein the centre taps of the half-bridge circuit (210, 212) and of the series circuit formed by the capacitors (230, 232) are connected to one another.

4. Circuit arrangement according to Claim 1, wherein the voltage regulating circuit consists of a step-down converter (34) with a power transistor (340) in the positive branch, a diode (342) connecting the positive and negative branches, and a third inductance (344), preferably a third coil, and a step-up converter (32) connected upstream or downstream, with a fourth inductance (320), preferably a fourth coil, a power transistor (322) connecting the positive and negative branches, and a diode (324) in the positive branch.

5. Circuit arrangement according to Claim 4, wherein the step-down converter (34) is arranged directly adjacent to the voltage doubling circuit (20) and the latter is arranged directly adjacent to the voltage source (12), and wherein the step-up converter (32) is arranged directly adjacent to the inverter circuit (50).

6. Circuit arrangement according to Claim 4, wherein the step-up converter (32) is arranged directly adjacent to the voltage doubling circuit (20) and the latter is arranged directly adjacent to the voltage source (12), and wherein the step-down converter (34) is arranged directly adjacent to the inverter circuit (50).

7. Circuit arrangement according to Claim 1, wherein the voltage regulating circuit (40) is embodied analogously to the voltage doubling circuit (20).

8. Method for driving a circuit arrangement according to any of the preceding claims, wherein the voltage doubling circuit (20) doubles the voltage of the unregulated voltage source (12), and wherein a regulation of a current/voltage characteristic curve, an MPP tracking, of the unregulated voltage source (12) is effected by the regulating device (328, 348) of the voltage regulating circuit (30).

9. Method according to Claim 8, wherein
the voltage doubling circuit (20) doubles the voltage of the unregulated voltage source (12) by the two power transistors (210, 212) of the half-bridge circuit being switched on in a temporally offset manner and in each case with the same period duration of in each case half of the switching period.

10. Method according to Claim 9, wherein
the two power transistors (210, 212) of the voltage doubling circuit (20) are driven with a frequency of between 250Hz and 5kHz, preferably between 500Hz and 2kHz.

## Revendications

1. Agencement de circuits avec un ou une pluralité d'agencements de circuits (10) partiels, connectés en parallèle, destiné à alimenter au moins un circuit d'onduleur (50) qui est susceptible d'être connecté avec un transformateur (80), un agencement de circuits (10) partiel étant constitué d'une source de tension (12) non réglée avec une tension de sortie variant dans le temps, **caractérisé en ce que** l'agencement de circuits partiel est constitué en supplément d'un circuit doubleur de tension (20) et d'un circuit régulateur de tension (30, 40) avec un système de régulation (328, 348).

2. Agencement de circuits selon la revendication 1,
le circuit doubleur de tension (20) comportant respectivement une branche de polarité positive et une branche de polarité négative, sur les entrées de ces dernières étant prévues respectivement une première (200) et une seconde (202) inductances formées d'une première et d'une seconde bobines ou à partir de l'inductance de la ligne d'alimentation respective de la source de tension (12), à quoi se raccorde, entre la branche positive et la branche négative un circuit en demi-pont de deux transistors de puissance (210, 212) et dans les deux branches étant prévu en outre chaque fois une diode (220, 222) et s'y raccordant un couplage en série de deux premiers condensateurs (230, 232) qui relie les deux branches.

3. Agencement de circuits selon la revendication 2, les branchements centraux du circuit en demi-pont (210, 212) et du couplage en série des condensateurs (230, 232) étant reliés ensemble.

4. Agencement de circuits selon la revendication 1, le circuit de réglage de la tension étant constitué d'un convertisseur abaisseur (34) avec un transistor de puissance (340) dans la première branche, d'une diode (342) reliant les branches positive et négative et d'une troisième inductance (344), de préférence d'une troisième bobine et d'un convertisseur élévateur (32) monté en amont ou en aval, avec une quatrième inductance (320), de préférence une quatrième bobine, d'un transistor de puissance (322) reliant les branches positive et négative et d'une diode (324).

5. Agencement de circuits selon la revendication 4, le convertisseur abaisseur (34) étant placé au voisinage direct du circuit doubleur de tension (20) et celui-ci étant placé au voisinage direct de la source de tension (12) et le convertisseur élévateur (32) étant placé au voisinage direct du circuit d'onduleur (50).

6. Agencement de circuits selon la revendication 4, le convertisseur élévateur (32) étant placé au voisinage direct du circuit doubleur de tension (20) et celui-ci étant placé au voisinage direct de la source de tension (12) et le convertisseur abaisseur (34) étant placé au voisinage direct du circuit d'onduleur (50).

7. Agencement de circuits selon la revendication 1, le circuit régulateur de tension (40) étant conçu de manière analogue au circuit doubleur de tension (20).

8. Procédé destiné à amorcer un agencement de circuits selon l'une quelconque des revendications précédentes, lors duquel le circuit doubleur de tension (20) double la tension de la source de tension (12) non réglée et il s'effectue une régulation d'une courbe caractéristique de courant/de tension, un traçage MPP, de la source de tension (12) non réglée par le système de régulation (328, 348) du circuit de régulation de tension (30).

9. Procédé selon la revendication 8,
lors duquel le circuit doubleur de tension (20) double la tension de la source de tension (12) non réglée en ce que les deux transistors de puissance (210, 212) du circuit en demi-pont sont activés en étant décalés dans le temps et chacun avec la même durée périodique de chaque fois la moitié de la période de commutation.

10. Procédé selon la revendication 9,
les deux transistors de puissance (210, 212) du circuit doubleur de tension (20) étant amorcés avec une fréquence comprise entre 250 HZ et 5 kHz, de préférence entre 500 Hz et 2 kHz.
